# EUROPÄISCHE PATENTSCHRIFT

(11) **EP 3 387 288 B1**
(45) Veröffentlichungstag und Bekanntmachung des Hinweises auf die Patenterteilung: **23.12.2020**
(21) Anmeldenummer: 16763465.8
(22) Anmeldetag: 31.08.2016
(51) Int. Cl.: F16F 13/18, F16F 13/26

(54) **HYDROLAGER SOWIE KRAFTFAHRZEUG MIT EINEM DERARTIGEN HYDROLAGER**
HYDRAULIC BEARING AND MOTOR VEHICLE COMPRISING SUCH A HYDRAULIC BEARING
PALIER HYDRAULIQUE ET VÉHICULE À MOTEUR ÉQUIPÉ D'UN PALIER HYDRAULIQUE DE CE TYPE

(30) Priorität: 11.12.2015 DE 102015224937
(43) Veröffentlichungstag der Anmeldung: 17.10.2018
(73) Patentinhaber: ContiTech Vibration Control GmbH, 30165 Hannover (DE)
(72) Erfinder: GENDERJAHN, Robert, Hannover 30625 (DE); MARIENFELD, Peter, 31608 Marklohe (DE)
(74) Vertreter: Preusser, Andrea
(86) Internationale Anmeldenummer: PCT/EP2016/070432
(87) Internationale Veröffentlichungsnummer: WO 2017/097448

(56) Entgegenhaltungen:
- EP-A1- 0 536 761
- EP-A2- 0 163 949
- JP-A- 2006 300 306

## Beschreibung

Die Erfindung betrifft ein Hydrolager aufweisend: ein zylindrisches Hauptgehäuse, eine von dem Hauptgehäuse eingefasste Tragfeder, eine von der Tragfeder zumindest teilweise umschlossene Arbeitskammer mit einem Arbeitskammervolumen, wobei die Arbeitskammer mit Hydraulikflüssigkeit gefüllt ist, eine Steuermembran, die zur Veränderung des Arbeitskammervolumens ausgebildet ist, einen Aktor, der zum Auslenken der Steuermembran an die Steuermembran gekoppelt ist, eine Ausgleichskammer, und einen Drosselkanal, der sich von der Arbeitskammer zu der Ausgleichskammer erstreckt, so dass die Arbeitskammer und die Ausgleichskammer hydraulisch verbunden sind.

Darüber hinaus betrifft die Erfindung ein Kraftfahrzeug aufweisend: einen Fahrzeugrahmen, einen Motor, und ein Hydrolager, das ein lagernde Verbindung zwischen dem Motor und dem Fahrzeugrahmen bildet.

Hydrolager, die auch als Hydrauliklager bezeichnet werden, sind aus dem Stand der Technik bekannt. Sie dienen zur elastischen Abstützung von Aggregaten, insbesondere von Kraftfahrzeugmotoren. Mit Hilfe derartiger, sich z. B. zwischen einem Motor und einem Chassis eines Kraftfahrzeugs angeordneten Hydrolagern soll verhindert werden, dass sich Motor-Vibrationen auf das Fahrzeuggestell übertragen. Dabei ist der bekannte Konflikt in der Schwingungsisolation zu beachten, der darin besteht, dass das Lager einerseits möglichst steif sein soll, um hohe Lasten bzw. Lagerkräfte aufnehmen zu können, und andererseits eine weiche Charakteristik aufweisen soll, um entstehende Schwingungen über einen möglichst breiten Frequenzbereich möglichst zu isolieren.

In ihrer Grundversion weisen derartige Hydrauliklager üblicherweise ein Gummielement als Tragfeder auf. Das Gummielement ist oft als Hohl-Konus ausgebildet. Die Tragfeder kann somit eine Mantelwandung der Arbeitskammer bilden. An der oberen Stirnseite der Tragfeder kann ein Anschlusselement zur Befestigung, insbesondere des Motors, angebracht sein. Das Anschlusselement ist für gewöhnlich ein Gewindebolzen, der mit dem Motor verschraubt werden kann. Unterseitig kann die Tragfeder mit dem Hauptgehäuse gekoppelt sein, um eine Kraftübertragung von der Tragfeder an das Hauptgehäuse zu ermöglichen. Das Hauptgehäuse kann, insbesondere radial außenseitig, Befestigungselemente aufweisen. Diese können zur Befestigung des Hauptgehäuses an dem Fahrzeuggestell dienen.

Bei einer Belastung des Hydrolagers wirkt eine Kraft in Längsrichtung des Hydrolagers auf die Tragfeder, so dass sich diese elastisch verformt. Diese Verformung wird auch als Einfedern der Tragfeder bezeichnet. Zu beachten ist in diesem Zusammenhang, dass die Arbeitskammer zumindest teilweise von der Tragfeder umschlossen oder umfasst ist. Deshalb wird die Arbeitskammer durch das Einfedern der Tragfeder verkleinert, womit der Druck in der Arbeitskammer ansteigt. Wird die Arbeitskammer nun durch das Einfedern der Tragfeder verkleinert, steigt der Druck in der Arbeitskammer an, so dass ein Teil der Hydraulikflüssigkeit aus der Arbeitskammer durch den Drosselkanal in die Ausgleichskammer strömt. Für die strömende Hydraulikflüssigkeit stellt der Drosselkanal einen Strömungswiderstand dar, was zu einer Dämpfungswirkung führt.

Die Dämpfungseigenschaften solcher Hydrolager sind aufgrund ihrer Bauweise frequenzabhängig. Statische oder quasistatische Belastungen unterhalb einer Frequenz von 5 Hz werden dabei üblicherweise von der Tragfeder aufgenommen, die eine relativ große Steifheit aufweist.

Niederfrequente Schwingungen, d.h. Schwingungen mit Frequenzen von ca. 5 bis 20 Hz, die im Allgemeinen mit großen Amplituden auftreten, werden durch das Zusammenwirken der beiden Hydraulikkammern über den Drosselkanal gedämpft. Die Dämpfung entsteht dabei mit dem Strömen von zumindest eines Teils der Hydraulikflüssigkeit der Arbeitskammer durch den Drosselkanal in die Ausgleichskammer, und umgekehrt.

Hochfrequente Schwingungen, also Schwingungen im Frequenzbereich oberhalb von 20 Hz bis beispielsweise 50 Hz, 100 Hz oder 200 Hz, werden aufgrund der Trägheit, Viskosität und Inkompressibilität der Hydraulikflüssigkeit und/oder der hohen Steifigkeit und Trägheit der Tragfeder oftmals nur sehr gering gedämpft oder sogar nahezu ungedämpft übertragen. Diese Schwingungen treten zwar im Allgemeinen nur mit kleinen Amplituden auf, sind aber aufgrund ihrer akustischen Wirkung von höherer Bedeutung.

Im Hinblick auf das verbesserte Isolieren solcher Schwingungen werden sogenannte aktiv gesteuerte Hydrolager eingesetzt, die jeweils einen Aktor, insbesondere einen elektrischen Linearaktuator, aufweisen. Als besonders zweckmäßig haben sich elektromagnetische Linearaktoren herausgestellt, die jeweils einen Stator und einen Anker aufweisen. Der Anker ist dabei beweglich gelagert zu dem Stator ausgebildet, so dass der Anker gegenüber dem Stator in Längsrichtung des Linearaktors ausgelenkt werden kann. Für das Hydrolager ist der Anker mechanisch mit einer Steuermembran verbunden oder gekoppelt, die vorzugsweise einer stirnseitigen Wandung der Arbeitskammer zugeordnet ist, um zumindest einen Teil einer Wandung für die Arbeitskammer zu bilden. Die Steuermembran kann in ihrer Normalenrichtung elastisch verformbar ausgestaltet sein. Indem der Anker mechanisch an die Steuermembran gekoppelt ist, kann die Steuermembran mit dem elektromagnetischen Linearaktor in ihrer Normalenrichtung gesteuert verformt werden. Dabei kann es vorgesehen sein, dass der Anker nicht unmittelbar mit der Steuermembran verbunden ist, sondern dass beispielsweise ein Gelenksmechanismus und/oder ein Ankerstößel vorgesehen sind, der bzw. die zwischen dem Anker und der Steuermembran angeordnet sind, um Bewegungen und/oder Kräfte vom Anker auf die Steuermembran zu übertragen. Der Gelenkmechanismus und/oder der Ankerstößel sollen deshalb dem Anker zugeordnet sein. Mit dem Verformen der Steuermembran in ihrer Normalenrichtung verändert sich das Hydraulikvolumen der Arbeitskammer, denn die Steuermembran bildet vorzugsweise einen Wandungsteil zu der Arbeitskammer. Deshalb dient der Aktor des Hydrolagers auch zur Steuerung oder Veränderung des Arbeitskammervolumens der Arbeitskammer. Durch eine Ansteuerung des Aktors und des entsprechenden Einwirkens auf die Steuermembran kann eine Absenkung der dynamischen Federrate des Hydrolagers im Bereich der hochfrequenten Schwingungen bewirkt werden.

Bei bekannten Hydrolagern ist die Ausgleichskammer unterhalb der Arbeitskammer angeordnet, wobei die Arbeitskammer und die Ausgleichskammer durch eine Trennwand voneinander getrennt sind. Die Trennwand kann teilweise von der Steuermembran gebildet sein. Eine derartige Ausgestaltung ist beispielsweise aus dem Dokument WO 2013/127574 A1 bekannt. JP 2006 300306 A offenbart den Oberbegriff des Anspruchs 1.

In der Praxis wurde festgestellt, dass an den zur Verfügung stehenden, vertikalen Bauraum des aktiven Hydrolagers immer höhere Anforderungen gestellt werden. Es besteht deshalb der Bedarf, ein Hydrolager bereitzustellen, das in Axialrichtung kompakter ausgestaltet ist. Der Erfindung liegt deshalb die Aufgabe zugrunde, ein in Axialrichtung möglichst kompaktes Hydrolager bereitzustellen.

Gelöst wird die genannte Aufgabe durch die Merkmale des Anspruchs 1.

Gemäß einem ersten Aspekt der Erfindung wird also ein Hydrolager zur Verfügung gestellt, das aufweist: ein zylindrisches Hauptgehäuse, eine von dem Hauptgehäuse eingefasste Tragfeder, eine von der Tragfeder zumindest teilweise umschlossene Arbeitskammer mit einem Arbeitskammervolumen, wobei die Arbeitskammer mit Hydraulikflüssigkeit gefüllt ist, eine Steuermembran, die zur Veränderung des Arbeitskammervolumens ausgebildet ist, einen Aktor, der zum Auslenken der Steuermembran an die Steuermembran gekoppelt ist, eine Ausgleichskammer, einen Drosselkanal, der sich von der Arbeitskammer zu der Ausgleichskammer erstreckt, so dass die Arbeitskammer und die Ausgleichskammer hydraulisch verbunden sind, und ein zylindrisches Kammergehäuse, das mit einer zugehörigen, ersten Stirnseite an einem äußeren Mantelseitenabschnitt des Hauptgehäuses angeordnet ist, wobei die Ausgleichskammer von zumindest einem Teil eines Innenraums des Kammergehäuses gebildet ist.

Die mantelseitige Anordnung des Kammergehäuses bietet den Vorteil, dass das Hydrolager in Axialrichtung kürzer und damit kompakter ausgestaltet werden kann. Mit der Axialrichtung des Hydrolagers ist vorzugsweise die Axialrichtung des zylindrischen Hauptgehäuses gemeint. Anstatt die Ausgleichskammer unterhalb der Arbeitskammer getrennt durch eine Trennwand anzuordnen, kann die Ausgleichskammer nunmehr mantelseitig zu dem Hauptgehäuse angeordnet sein. Damit wird es ermöglicht, dass der Aktor möglichst nah, insbesondere unmittelbar, zu der Steuermembran angeordnet ist. Das Hydrolager kann deshalb in Axialrichtung um eine Länge verkürzt sein, die zuvor in Axialrichtung für die Ausgleichskammer vorgesehen war.

Ein weiterer Vorteil bildet die zylindrische Ausgestaltung des Kammergehäuses. Denn das Kammergehäuse ist mit einer zugehörigen, ersten Stirnseite an einem äußeren Mantelseitenabschnitt des Hauptgehäuses angeordnet. In der Praxis wurde festgestellt, dass in Umfangsrichtung nicht jeder Mantelseitenabschnitt des Hauptgehäuses zur Anordnung des Kammergehäuses vorteilhaft ist. Denn oftmals wird das Hydrolager unmittelbar neben dem Gegenstand, insbesondere einem Motor, angeordnet, den es lagern soll. In einem beispielhaften Fall wäre ein mantelseitiger Bereich des Hydrolagers, der dem Motor zugewendet ist, nicht bevorzugt geeignet, um dort das Kammergehäuse anzuordnen. Eine ringförmig umlaufende Ausgestaltung eines Kammergehäuses um das Hauptgehäuse würde in diesem Fall ebenfalls ungeeignet sein. Deshalb bietet die zylindrische Ausgestaltung des Kammergehäuses den Vorteil, dass dieses beispielsweise an einem gegenüberliegenden, äußeren Mantelabschnitt des Hauptgehäuses angeordnet ist. An diesem Mantelseitenabschnitt kann Bauraum zur Verfügung stehen, um das zylindrische Kammergehäuse auszubilden. Das Hydrolager kann deshalb eine unsymmetrische Ausgestaltung aufweisen, die insbesondere durch die zu dem Hauptgehäuse mantelseitige Anordnung des zylindrischen Kammergehäuses entstehen kann.

Es sei darauf hingewiesen, dass eine zylindrische Ausgestaltung des Kammergehäuses nicht auf eine kreiszylindrische Ausgestaltung des Kammergehäuses beschränkt ist. So kann das Kammergehäuse im Querschnitt ringförmig ausgebildet sein. Dies erlaubt beispielsweise eine zylindrische Ausgestaltung des Kammergehäuses mit einem ovalen Querschnitt. Alternativ kann der Querschnitt des zylindrischen Kammergehäuses auch mehreckig, so beispielsweise viereckig, fünfeckig, sechseckig und/oder nach Art eines Polygons ausgestaltet sein. In Axialrichtung kann das Kammergehäuse rohrförmig ausgestaltet sein. Außerdem ist es möglich, dass das Kammergehäuse in Axialrichtung konisch ausgestaltet ist, so dass sich ein mittlerer Durchmesser des Kammergehäuses in Axialrichtung vergrößert oder verkleinert. Andere Ausgestaltungen des Kammergehäuses sind jedoch auch denkbar.

Die Ausgleichskammer wird zumindest von einem Teil des Innenraums des Kammergehäuses gebildet. Somit ist auch die Ausgleichskammer mantelaußenseitig zu dem Hauptgehäuse angeordnet. Dies erleichtert eine Abdichtung der Ausgleichskammer. Außerdem bietet die Anordnung der Ausgleichskammer außerhalb des Hauptgehäuses den Vorteil, dass der Aktor besonders gut von der Hydraulikflüssigkeit trennbar ist. Denn eine Hydraulikflüssigkeit in der Ausgleichskammer ist nunmehr nicht mehr in unmittelbarer Nähe seitlich zu dem Aktor und/oder oberhalb des Aktors angeordnet.

Die mantelseitige Anordnung des zylindrischen Kammergehäuses bietet darüber hinaus den Vorteil, dass für den Aktor ein größerer, insbesondere in Radialrichtung größerer Bauraum zur Verfügung steht. Dies erlaubt eine Leistungserhöhung des Aktors und/oder eine Reduzierung der Bauhöhe des Aktors in Axialrichtung des Hydrolagers. Mit der Verringerung der Bauhöhe in Axialrichtung des Hydrolagers ermöglicht ein derart ausgestalteter Aktor eine weitere Reduzierung des Bauraums des Hydrolagers in Axialrichtung, so dass das Hydrolager in Axialrichtung noch kompakter ausgestaltet werden kann.

Eine vorteilhafte Ausgestaltung des Hydrolagers zeichnet sich durch eine Rollmembran aus, die umlaufend an einer Mantelwandung des Kammergehäuses befestigt ist, so dass die Rollmembran den Innenraum des Kammergehäuses in die Ausgleichskammer und eine Zusatzkammer unterteilt. Eine derartige Ausgestaltung des Hydrolagers ist hinsichtlich der Rollmembran besonders einfach herstellbar. Denn die von dem Hauptgehäuse abgewandte Stirnseite des Kammergehäuses kann zumindest bei der Montage noch offen ausgestaltet sein, so dass die Rollmembran durch die zuvor genannte stirnseitige Öffnung in den Innenraum des Kammergehäuses einsetzbar ist. Alternativ kann die Rollmembran an der Stirnseite der Mantelwandung befestigt sein, die von dem Hauptgehäuse abgewandt ist. Vorzugsweise ist die Rollmembran elastisch verformbar, so dass bei einem Einströmen von Hydraulikflüssigkeit, die aus der Arbeitskammer stammt, eine elastische Verformung der Rollmembran erfolgen kann, was eine Veränderung, insbesondere Vergrößerung, des Ausgleichskammervolumens der Ausgleichskammer ermöglicht, um die einströmende Hydraulikflüssigkeit aufzunehmen.

Eine weitere vorteilhafte Ausgestaltung des Hydrolagers zeichnet sich dadurch aus, dass eine Axialrichtung des zylindrischen Kammergehäuses in einer Radialrichtung des Hauptgehäuses oder schräg zu der Radialrichtung des Hauptgehäuses ausgerichtet ist. Dies bietet den Vorteil, dass das Kammergehäuse außenseitig an oder zu dem Hauptgehäuse ausgebildet ist. Besonders bevorzugt ist die Axialrichtung des zylindrischen Kammergehäuses in Radialrichtung des Hauptgehäuses oder parallel zu der Radialrichtung des Hauptgehäuses ausgerichtet. Dies bietet den Vorteil, dass das Kammergehäuse sich nicht bis in einen Bereich hervorstreckt, der in Axialrichtung des Hydrolagers über eine der zugehörigen Stirnseiten hinausragt. Dies unterstützt die besonders kompakte Bauform des Hydrolagers in der zugehörigen Axialrichtung.

Eine weitere vorteilhafte Ausgestaltung des Hydrolagers zeichnet sich dadurch aus, dass das Hauptgehäuse und das Kammergehäuse zumindest teilweise integral ausgebildet sind. Diese Ausgestaltung bietet den Vorteil, dass beide Gehäuse beispielsweise durch einen gemeinsamen Herstellungsschritt herstellbar sind. So können das Hauptgehäuse und das Kammergehäuse beispielsweise vollständig integral ausgebildet sein. Alternativ ist es möglich, dass beispielsweise ein Teil des Kammergehäuses integral mit dem Hauptgehäuse ausgebildet ist. So kann sich beispielsweise zumindest ein Teil der Mantelwandung des Kammergehäuses von einer Mantelwandung des Hauptgehäuses nach außen weg erstrecken. Sofern das Mantelgehäuse mehrteilig ausgestaltet ist, kann hierbei ein Teil der Mantelwandung des Kammergehäuses integral mit der Mantelwandung des Hauptgehäuses ausgebildet sein. Ein zumindest weiterer Teil des Kammergehäuses kann an dem mit dem Hauptgehäuse integral ausgebildeten Teil des Kammergehäuses mechanisch befestigt sein. Die zumindest teilweise integrale Ausbildung des Hauptgehäuses und des Kammergehäuses bietet den Vorteil einer einfachen Montage der Rollmembran. So kann diese beispielsweise durch zwei Teile des Kammergehäuses befestigt sein, wobei einer der beiden Teile integral mit dem Hauptgehäuse ausgebildet ist.

Eine weitere vorteilhafte Ausgestaltung des Hydrolagers zeichnet sich dadurch aus, dass das Hauptgehäuse und das Kammergehäuse getrennt ausgebildet sind, wobei das Kammergehäuse an dem Hauptgehäuse befestigt ist. Diese Ausgestaltung bietet den Vorteil, dass das Kammergehäuse und das Hauptgehäuse getrennt und/oder parallel gefertigt werden können. Außerdem lassen sich für das Kammergehäuse und das Hauptgehäuse unterschiedliche Herstellungsmaterialien vorsehen, die beispielsweise den im Betrieb vorhersehbaren Belastungen standhalten, ohne das Gewicht des Hydrolagers darüber hinaus unnötig zu erhöhen. In einem Beispiel kann das Kammergehäuse kraftschlüssig, formschlüssig und/oder stoffschlüssig an dem Hauptgehäuse befestigt sein. So kann das Kammergehäuse beispielsweise durch eine Schraubenverbindung an dem Hauptgehäuse befestigt sein. Alternativ können das Kammergehäuse und das Hauptgehäuse derart ausgebildet sein, dass beim Befestigen des Kammergehäuses an dem Hauptgehäuse eine Clips- oder Schnappverbindung entsteht. Die zuvor genannten Merkmale und Vorteile können in analoger Weise für eine Verbindung zwischen zwei Teilen des Kammergehäuses vorgesehen und/oder ausgebildet sein.

Eine weitere vorteilhafte Ausgestaltung des Hydrolagers zeichnet sich dadurch aus, dass der Drosselkanal zumindest teilweise von einem Flüssigkeitskanal einer Drosseleinheit gebildet ist, wobei die Drosseleinheit in dem Hauptgehäuse unterhalb der Tragfeder angeordnet ist. Der Flüssigkeitskanal kann dabei als hydraulischer Widerstand für die Hydraulikflüssigkeit wirken, die von der Arbeitskammer zu der Ausgleichskammer, oder umgekehrt, strömt. Deshalb eignet sich der Flüssigkeitskanal der Drosseleinheit auch dazu, zumindest einen Teil des Drosselkanals auszubilden. Die Anordnung der Drosseleinheit unterhalb der Tragfeder bietet außerdem die Möglichkeit, dass die Drosseleinheit zumindest einen Teil einer Wandung zur Begrenzung der Arbeitskammer bildet. Somit kann die Drosseleinheit eine Doppelfunktion aufweisen, nämlich einerseits die Ausbildung zumindest eines Teils der Wandung zur Begrenzung der Arbeitskammer und die Ausbildung des Flüssigkeitskanals. Dies wiederum bietet die Möglichkeit, dass die Drosseleinheit eine Öffnung aufweist, die eine Fluidverbindung zwischen der Arbeitskammer und dem Flüssigkeitskanal erlaubt. Mit dieser Ausgestaltung kann das Hydrolager besonders kompakt ausgebildet werden.

Eine weitere vorteilhafte Ausgestaltung des Hydrolagers zeichnet sich dadurch aus, dass die Drosseleinheit ringförmig mit einem mittigen Aufnahmebereich ausgebildet ist, wobei die Steuermembran und/oder der Aktor in dem Aufnahmebereich zumindest teilweise angeordnet ist bzw. sind. Indem die Steuermembran und/oder der Aktor zumindest teilweise in dem Aufnahmebereich der Drosseleinheit angeordnet ist bzw. sind, kann das Hydrolager in Axialrichtung besonders kompakt ausgebildet werden. So kann beispielsweise ein Anker des Aktors unmittelbar an die Steuermembran gekoppelt sein. Alternativ ist es möglich, dass ein Ankerstößel, der zum Verbinden des Ankers mit der Steuermembran ausgebildet ist, besonders kurz ausgebildet ist. Beide Alternativen bieten den Vorteil einer Gewichtsreduktion des Aktors, was wiederum eine Erhöhung einer Resonanzfrequenz mit Bezug auf den Aktor ermöglicht.

Eine weitere vorteilhafte Ausgestaltung des Hydrolagers zeichnet sich dadurch aus, dass der Drosselkanal zumindest teilweise von einem Flüssigkeitskanal einer Drosseleinheit gebildet ist, wobei die Drosseleinheit in dem Kammergehäuse an der zugehörigen ersten Stirnseite angeordnet ist. Diese Ausgestaltung kann vorzugsweise als Alternative zu den beiden vorangegangenen erläuterten Ausgestaltungen des Hydrolagers sein. Indem die Drosseleinheit beispielsweise nicht in dem Hauptgehäuse, sondern in dem Kammergehäuse angeordnet ist, kann das Hydrolager in Axialrichtung weiter verkürzt sein, was eine vorteilhafte Kompaktheit des Hydrolagers in Axialrichtung bietet. Außerdem bietet diese Ausgestaltung den Vorteil, dass die Drosseleinheit und damit zumindest teilweise auch der Drosselkanal besonders einfach herstellbar und/oder montierbar ist. So kann die Drosseleinheit beispielsweise als separate Einheit ausgestaltet sein. In diesem Fall kann die Drosseleinheit zur Montage in die Arbeitskammer eingebracht und dort befestigt werden. Indem die Drosseleinheit an der ersten Stirnseite des Kammergehäuses angeordnet ist, ist es besonders einfach möglich, dass Hydraulikflüssigkeit aus der Arbeitskammer beim Durchströmen des Drosselkanals, und damit auch beim Durchströmen des Flüssigkeitskanals der Drosseleinheit, zunächst durch die Drosseleinheit strömen muss, bevor es in die Ausgleichskammer strömen kann. Dies erlaubt auch eine besonders kompakte Ausgestaltung des Kammergehäuses, da durch die stirnseitige Anordnung eine besonders kompakte Ausgestaltung der Drosseleinheit ermöglicht ist.

Eine weitere vorteilhafte Ausgestaltung des Hydrolagers zeichnet sich dadurch aus, dass die Drosseleinheit zumindest teilweise von einer ersten Stirnwand an der ersten Stirnseite des Kammergehäuses ausgebildet ist. Somit können die Drosseleinheit und das Kammergehäuse zumindest teilweise integral ausgebildet sein. Dies ermöglicht eine besonders einfache Herstellung.

Eine weitere vorteilhafte Ausgestaltung des Hydrolagers zeichnet sich dadurch aus, dass der Drosselkanal zumindest teilweise von einem Flüssigkeitskanal einer Drosseleinheit gebildet ist, und dass die Drosseleinheit zumindest teilweise von einer Mantelwandung im Bereich des Mantelseitenabschnitts des Hauptgehäuses ausgebildet ist. Diese Ausgestaltung des Hydrolagers kann vorzugsweise alternativ zu den vorangegangenen Ausgestaltungen des Hydrolagers mit der Drosseleinheit angesehen werden. Zuvor wurde bereits erläutert, dass das Kammergehäuse mit einer zugehörigen, ersten Stirnseite an dem äußeren Mantelseitenabschnitt des Hauptgehäuses angeordnet ist. Indem dieser Mantelseitenabschnitt des Hauptgehäuses außerdem die Drosseleinheit zumindest teilweise ausbildet, kann die Herstellung des Hydrolagers erleichtert werden. Denn die Drosseleinheit ist in diesem Fall mit der Herstellung des Hauptgehäuses zumindest teilweise mitherstellbar. Insbesondere ist es möglich, dass zumindest ein Teil der Drosseleinheit durch radial außenseitige Vertiefungen in der Mantelwandung im Bereich des Mantelseitenabschnitts des Hauptgehäuses ausgebildet ist.

Eine vorteilhafte Ausgestaltung des Hydrolagers zeichnet sich dadurch aus, dass der Drosseleinheit eine Drosselscheibe mit einer Durchgangsöffnung zugeordnet ist, die eine Öffnung des Drosselkanals zu der Ausgleichskammer bildet. Wird die Drosseleinheit zumindest teilweise durch radial außenseitige Vertiefungen in der Mantelwandung im Bereich des Mantelseitenabschnitts des Hauptgehäuses gebildet, kann der Flüssigkeitskanal durch das Auflegen und/oder entsprechende Anordnen der Drosselscheibe oberhalb der radialseitigen Vertiefungen gebildet werden. Diese Ausgestaltung ermöglicht eine besonders einfache Herstellung des Flüssigkeitskanals der Drosseleinheit.

Eine weitere vorteilhafte Ausgestaltung des Hydrolagers zeichnet sich durch einen Verbindungskanal aus, der zumindest einen Teil des Drosselkanals bildet und der sich durch die Tragfeder und/oder das Hauptgehäuse erstreckt. Der Verbindungskanal kann beispielsweise durch eine Bohrung durch die Tragfeder und/oder das Hauptgehäuse ausgebildet sein. Zusätzlich kann ein Rohr, insbesondere ein Metallrohr oder ein Kunststoffrohr, vorgesehen sein, das in die zuvor genannte Bohrung eingesetzt ist. Der Verbindungskanal kann dazu dienen, die Arbeitskammer mit dem Flüssigkeitskanal der Drosseleinheit hydraulisch zu verbinden.

Eine weitere vorteilhafte Ausgestaltung des Hydrolagers zeichnet sich durch einen Deckel aus, der an einer zweiten Stirnseite des Kammergehäuses angeordnet ist. Der Deckel kann zum Verschließen des Kammergehäuses an der zweiten Stirnseite dienen, wobei die zweite Stirnseite von dem Hauptgehäuse abgewandt ist. Der Deckel kann eine Öffnung, insbesondere eine Belüftungsöffnung aufweisen. Die Belüftungsöffnung kann eine Luft- oder Gasverbindung zwischen der Zusatzkammer und der Umgebung des Hydrolagers herstellen.

Gemäß einem zweiten Aspekt der Erfindung wird die eingangs genannte Aufgabe gelöst durch ein Fahrzeug, das aufweist: einen Fahrzeugrahmen, einen Motor, und ein als Hydrolager ausgebildetes Motorlager, das eine lagernde Verbindung zwischen dem Motor und dem Fahrzeugrahmen bildet. Somit kann das Motorlager durch ein Hydrolager nach einem der zuvor genannten Ausgestaltungen oder Beispiele ausgebildet sein. Für das Kraftfahrzeug gelten deshalb die zuvor genannten Vorteile, die im Zusammenhang mit dem Hydrolager erläutert worden sind.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigen:
- Fig. 1: eine schematische Schnittdarstellung des Hydrolagers in einer Ausgestaltungsvariante gemäß der Erfindung.
- Fig. 2: eine schematische, unterseitige Ansicht des Hauptgehäuses des Hydrolagers in einer weiteren Ausgestaltungsvariante gemäß der Erfindung.
- Fig. 3: eine schematische, perspektivische Ansicht des Hauptgehäuses des Hydrolagers in einer weiteren Ausgestaltungsvariante gemäß der Erfindung.
- Fig. 4: eine erste schematische, perspektivische Ansicht in die Arbeitskammer des Hydrolagers in einer weiteren Ausgestaltungsvariante der Erfindung.
- Fig. 5: eine zweite schematische, perspektivische Ansicht in die Arbeitskammer des Hydrolagers in der zuvor genannten Ausgestaltungsvariante der Erfindung.
- Fig. 6: eine dritte schematische, perspektivische Ansicht in die Arbeitskammer des Hydrolagers in der zuvor genannten Ausgestaltungsvariante der Erfindung.
- Fig. 7: eine vierte schematische, perspektivische Ansicht in die Arbeitskammer des Hydrolagers in der zuvor genannten Ausgestaltungsvariante der Erfindung.
- Fig. 8: eine schematische Schnittdarstellung des Hydrolagers in einer weiteren Ausgestaltungsvariante gemäß der Erfindung.
- Fig. 9: eine schematische perspektivische Darstellung der Drosseleinheit in einer Ausgestaltungsvariante gemäß der Erfindung.

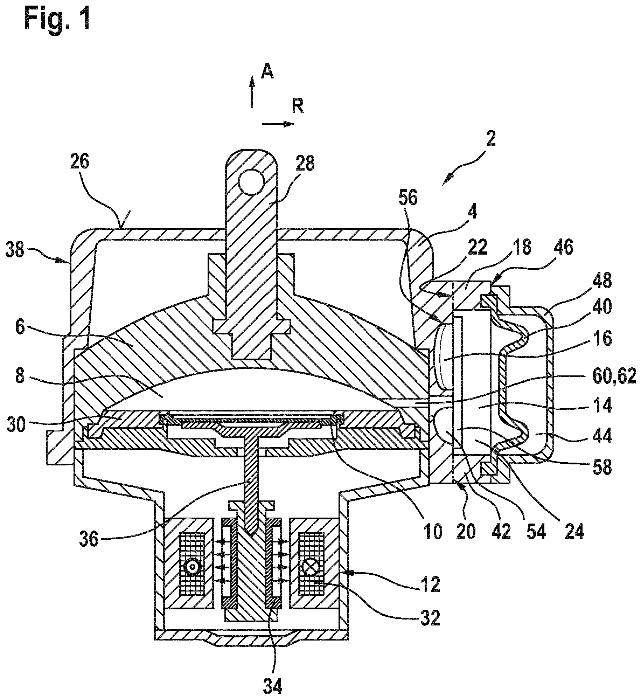

Die Fig. 1 zeigt ein Hydrolager 2 in einer schematischen Schnittansicht. Das Hydrolager 2 ist bevorzugt als ein aktives Hydrolager 2 ausgestaltet. Das Hydrolager 2 weist ein zylindrisches Hauptgehäuse 4 auf. Von dem Hauptgehäuse 4 ist eine Tragfeder 6 eingefasst. An einer oberen Stirnseite 26 weist das Hauptgehäuse 4 eine Öffnung auf, durch die die Tragfeder 6 mit einem Befestigungsmittel 28 verbindbar ist. Das Befestigungsmittel 28 dient zum Befestigen oder Verbinden der Tragfeder 6 mit einer Einheit, die gelagert werden soll. Vorzugsweise kann das Befestigungsmittel 28 mit einem Motor verbunden werden.

Außerdem weist das Hydrolager 2 eine von der Tragfeder 6 zumindest teilweise umschlossene Arbeitskammer 8 auf. Dazu kann die Tragfeder 6 an ihrer von der Stirnseite 26 abgewandten Seite konkav gestaltet sein. Ein durch die konkave Ausgestaltung der Tragfeder 6 gebildeter Hohlraum kann zumindest teilweise die Arbeitskammer 8 mitbilden.

Unterseitig an die Tragfeder 6 grenzt eine Trennwand 30 an. Die Trennwand 30 kann somit auch zur Begrenzung der Arbeitskammer 8 dienen. Mittig kann von der Trennwand 30 eine Steuermembran 10 ausgebildet sein. Alternativ kann die Steuermembran 10 mittig in der Trennwand und dicht mit der Trennwand 30 verbunden angeordnet sein. Die Steuermembran 10 ist in Axialrichtung A des Hydrolagers 2 elastisch verformbar ausgebildet. Die Axialrichtung A ist auch die Axialrichtung A des Hauptgehäuses 4.

Für das Hydrolager 2 ist außerdem ein Aktor 12 vorgesehen. Vorzugsweise handelt es sich bei dem Aktor 12 um einen elektromagnetischen Aktor 12. Der Aktor 12 ist zum Auslenken der Steuermembran 10 ausgebildet und somit mit der Steuermembran 10 gekoppelt. Dazu kann der Aktor 12 einen Stator 32 und einen Anker 34 aufweisen. Vorzugsweise ist der Anker 34 mit einem Ankerstößel 36 verbunden, wobei der Ankerstößel 36 mit der Steuermembran 10 mechanisch gekoppelt ist, so dass durch ein Auslenken des Ankers 34 eine Auslenkung der Steuermembran 10 hervorrufbar ist. Durch das Auslenken der Steuermembran 10 ist das Arbeitskammervolumen der Arbeitskammer 8 veränderbar. Die Kopplung zwischen dem Aktor 12 und der Steuermembran 10 kann deshalb zur dynamischen Steuerung einer dynamischen Steifigkeit des Hydrolagers 2 verwendet werden.

Darüber hinaus weist das Hydrolager 2 einen Drosselkanal 16 auf. Der Drosselkanal 16 erstreckt sich von der Arbeitskammer 8 zu der Ausgleichskammer 14, so dass die Arbeitskammer 8 und die Ausgleichskammer 14 mittels des Drosselkanals 16 hydraulisch verbunden sind. Der Drosselkanal 16 stellt einen hydraulischen Widerstand für Hydraulikflüssigkeit dar. Steigt der Druck in der Arbeitskammer 8 beispielsweise durch Krafteinwirkung auf das Befestigungselement 28 und somit auf die Tragfeder 6 an, verursacht dies ein Strömen von Hydraulikflüssigkeit aus der Arbeitskammer 8 durch den Drosselkanal 16 in die Ausgleichskammer 14. Sinkt der Druck in der Arbeitskammer 8, kann die Hydraulikflüssigkeit in entgegengesetzter Richtung aus der Ausgleichskammer 14 durch den Drosselkanal 16 zurück in die Arbeitskammer 8 strömen. Bei der Hydraulikflüssigkeit handelt es sich vorzugsweise um ein Gemisch aus Öl und Wasser.

Das Hydrolager 2 zeichnet sich außerdem durch ein zylindrisches Kammergehäuse 18 aus. Das zylindrische Kammergehäuse 18 ist mit einer zugehörigen, ersten Stirnseite 20 an einem äußeren Mantelseitenabschnitt 22 des Hauptgehäuses 4 angeordnet. Die mantelseitige Anordnung des zylindrischen Kammergehäuses 18 bietet den Vorteil, dass das Hydrolager 2 in Axialrichtung A besonders kompakt ausgestaltet sein kann. Denn die Ausgleichskammer 14 ist zumindest von einem Teil eines Innenraums 24 des Kammergehäuses 18 gebildet. Somit ist in Axialrichtung A des Hydrolagers 2 kein Bauraum innerhalb des Hauptgehäuses 4 für die Ausgleichskammer 14 vorzusehen, was eine Baulänge des Hydrolagers 2 in Axialrichtung A reduziert. Darüber hinaus ist das Kammergehäuse 18 nicht umlaufend an der äußeren Mantelseite des Hauptgehäuses 4 angeordnet, sondern an einem Mantelseitenabschnitt 22 des Hauptgehäuses 4. Dieser Mantelseitenabschnitt 22 bildet nur einen, insbesondere kleinen, Teil der mantelseitigen Außenfläche des Hauptgehäuses 4. Somit kann das Hydrolager 2 mit einem zu dem Mantelseitenabschnitt 22 gegenüberliegenden, weiteren Mantelseitenabschnitt 38 besonders dicht an benachbarte Bauelemente oder an das zu lagernde Bauteil angeordnet werden. Dies erlaubt eine besonders gute Ausnutzung des zur Verfügung stehenden Bauraums.

Zur Bildung der Ausgleichskammer 14 kann außerdem eine Rollmembran 40 für das Hydrolager 2 vorgesehen sein. Die Rollmembran 40 ist bevorzugt umlaufend an einer Mantelwandung 42 des Kammergehäuses 18 befestigt, so dass die Rollmembran 40 den Innenraum 24 des Kammergehäuses 18 in die Ausgleichskammer 14 und eine Zusatzkammer 44 unterteilt. Dabei ist es bevorzugt vorgesehen, dass die Rollmembran 40 an einer von dem Hauptgehäuse 4 abgewandten Stirnseite 46 des Kammergehäuses 18 befestigt ist. Zur kraft- und/oder formschlüssigen Verbindung zwischen der Rollmembran 40 und dem Kammergehäuse 18 kann außerdem ein Deckel 48 vorgesehen sein, der an dem Kammergehäuse 18 kraft- und/oder formschlüssig befestigt ist, und so die Rollmembran 40 gegen das Kammergehäuse 18 presst.

Das Hauptgehäuse 4 und das Kammergehäuse 18 können in einer Ausgestaltungsvariante zumindest teilweise integral ausgebildet sein. So ist es möglich, dass ein integraler Übergang von einer Mantelwandung des Hauptgehäuses 4 zu einer Mantelwandung des Kammergehäuses 18 ausgebildet ist. Dabei kann von dieser integralen Ausgestaltung beispielsweise nur ein Teil der Mantelwandung des Kammergehäuses 18 gebildet sein. Alternativ kann die vollständige Mantelwandung des Kammergehäuses 18 integral mit einer Mantelwandung des Hauptgehäuses 4 ausgebildet sein.

Gemäß einer alternativen Ausgestaltung können das Kammergehäuse 18 und das Hauptgehäuse 4 getrennt ausgebildet sein. Dabei kann das Kammergehäuse 18 an dem Hauptgehäuse 4, beispielsweise kraft- und/oder formschlüssig, befestigt sein. In beiden alternativen Ausgestaltungen ragt das Kammergehäuse 18 in Radialrichtung R, oder schräg dazu, über eine Mantelwandung des Hauptgehäuses 4 hinaus.

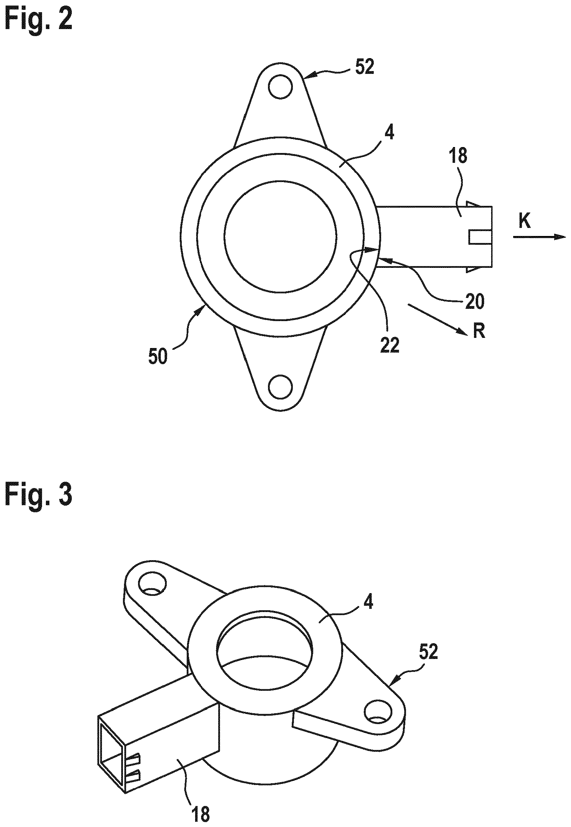

In der Fig. 2 ist das Hauptgehäuse 2 in einer schematischen, unterseitigen Ansicht dargestellt. Dabei ist zu erkennen, dass das Kammergehäuse 18 mit der zugehörigen ersten Stirnseite 20 nur an einen Teil der Mantelwandung des Hauptgehäuses 4, nämlich an den äußeren Mantelseitenabschnitt 22 des Hauptgehäuses 4, angrenzt. Somit ist der übrige Bereich 50 der Mantelwandung des Hauptgehäuses 4 frei von dem Kammergehäuse 18.

Darüber hinaus ist aus der Fig. 2 zu erkennen, dass eine Axialrichtung K des zylindrischen Kammergehäuses 18 schräg zu der Radialrichtung R des Hauptgehäuses 4 ausgerichtet ist. Alternativ kann es vorgesehen sein, dass die Axialrichtung K des zylindrischen Kammergehäuses 18 in Radialrichtung R des Hauptgehäuses 4 ausgerichtet ist.

In Fig. 3 ist das Hauptgehäuse 4 in einer schematischen, perspektivischen Ansicht dargestellt. Dabei ist zu erkennen, dass zumindest ein Teil des Kammergehäuses 18 integral mit dem Hauptgehäuse 4 ausgebildet sein kann. Darüber hinaus sind in Fig. 3 Halterungen 52 des Hauptgehäuses 4 dargestellt, die zur Befestigung des Hydrolagers 2 dienen. Somit kann eine Lagerung von zwei Elementen gewährleistet werden, wobei eines der Elemente an den Halterungen 52 und das andere Element an dem Befestigungselement 28 befestigbar ist.

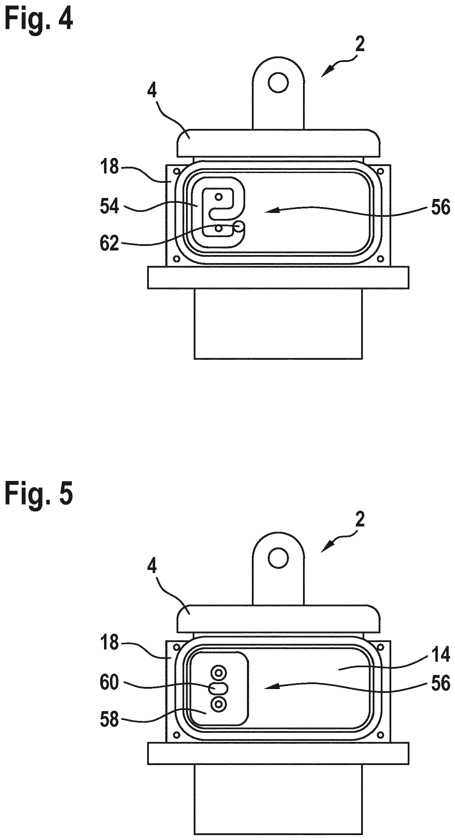

Unter erneuter Betrachtung der Fig. 1 ist aus dieser außerdem zu entnehmen, dass von dem Mantelseitenabschnitt 22, an dem das zylindrische Kammergehäuse 18 angeordnet ist, zumindest einen Teil des Drosselkanals 16 mit ausbildet ist. Für eine bevorzugte Ausgestaltung ist es deshalb vorgesehen, dass der Drosselkanal 16 zumindest teilweise von einem Flüssigkeitskanal 54 einer Drosseleinheit 56 gebildet ist, und dass die Drosseleinheit 56 zumindest teilweise von einer Mantelwandung im Bereich des Mantelseitenabschnitts 22 des Hauptgehäuses 4 ausgebildet ist. Die Drosseleinheit 56 und das Hauptgehäuse 4 können also zumindest teilweise integral ausgestaltet sein. Aus der Fig. 1 ist außerdem zu entnehmen, dass das Hauptgehäuse 4 im Bereich des Mantelseitenabschnitts 22 Vertiefungen aufweist, die dem Flüssigkeitskanal 54 zugeordnet werden können. Um nun einen geschlossenen Kanal zu bilden, kann außerdem eine Drosselscheibe 58 vorgesehen sein, die mit der Mantelwandung im Bereich des Mantelseitenabschnitts 22 des Hauptgehäuses 4 zusammenwirkt, so dass der Flüssigkeitskanal 54 gebildet werden kann. Eine weitere vorteilhafte Ausgestaltung des Hydrolagers zeichnet sich deshalb dadurch aus, dass der Drosseleinheit 56 eine Drosselscheibe 58 mit einer Durchgangsöffnung 60 (wie beispielsweise in Fig. 5 gezeigt) zugeordnet ist, die eine Öffnung des Drosselkanals 16 zu der Ausgleichskammer 14 bildet.

Aus der Fig. 4 ist eine erste Seitenansicht die Kammergehäuse 18 dargestellt. Die Ansicht ist dabei derart gewählt, dass der Flüssigkeitskanal 54 zu erkennen ist. Vorzugsweise ist der Flüssigkeitskanal 56 schneckenförmig und/oder schlangenförmig ausgebildet. Ein erstes Ende des Flüssigkeitskanals 54 ist mit dem Verbindungskanal 62 verbunden. Dieser Verbindungskanal 62 ist auch in Fig. 1 gezeigt. Vorzugsweise erstreckt sich der Verbindungskanal 62 durch die Tragfeder 6 und das Hauptgehäuse 4. Der Verbindungskanal 62 kann also eine hydraulische Verbindung zwischen der Arbeitskammer 8 und dem Flüssigkeitskanal 54 herstellen. Somit kann der Verbindungskanal 62 zumindest einen Teil des Drosselkanals 16 bilden. Der Verbindungskanal 62 kann durch eine Bohrung und/oder ein Rohr ausgestaltet sein.

Das zweite Ende des Flüssigkeitskanals 54 endet an der Durchgangsöffnung 60 der Drosselscheibe 58, wie es aus der Zusammenschau der Fig. 4 und 5 zu entnehmen ist. Die Fig. 5 zeigt dabei eine weitere Seitenansicht in da Kammergehäuse 18 des Hydrolagers 2. Die Drosselscheibe 58 ist dabei derart auf die Vertiefungen an der Mantelwandung im Bereich des Mantelseitenabschnitts 22 des Hauptgehäuses 4 aufgesetzt, dass sich zwischen der Mantelwandung 4 und der Drosselscheibe 58 der Flüssigkeitskanal 54 ausbildet.

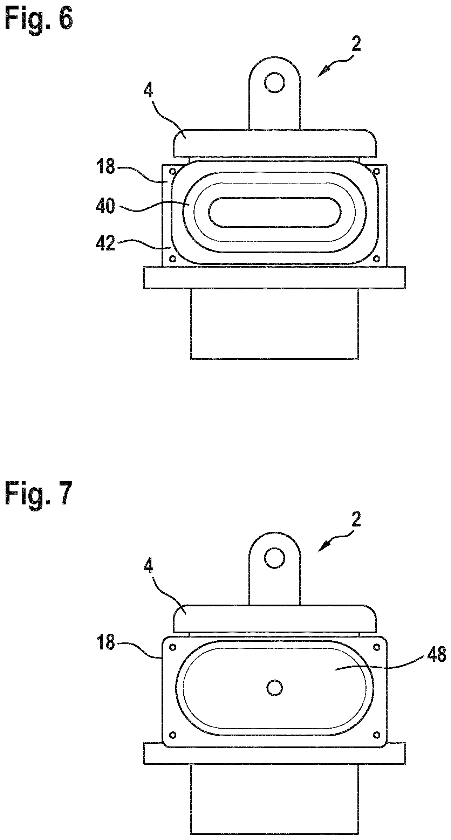

In der Fig. 6 ist eine weitere Seitenansicht in das Kammergehäuse des Hydrolagers 2 gezeigt. Dabei ist aus Fig. 4 zu erkennen, dass eine Rollmembran 40 umlaufend an der Mantelwandung 42 des Kammergehäuses 18 befestigt ist. Die Rollmembran 40 kann also einen Teil des Innenraums des Kammergehäuses 18 für die Ausgleichskammer 14 abtrennen.

Zum Schutz der Rollmembran 40 kann ein Deckel 48 an der äußeren Stirnseite des Kammergehäuses 18 befestigt sein, wie dies aus der Fig. 7 zu entnehmen ist. Mit dem Deckel 48 kann die Rollmembran zudem an der Mantelwandung 42 des Kammergehäuses 18 befestigt sein.

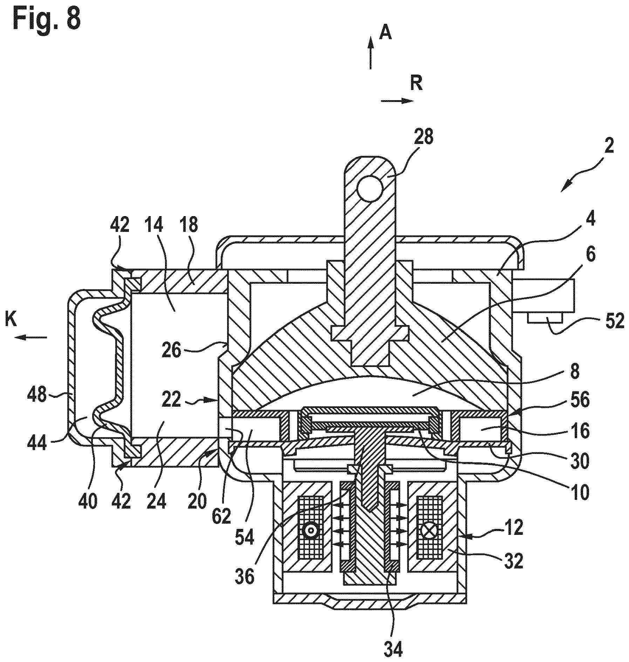

In Fig. 8 ist eine alternative Ausgestaltungsvariante des Hydrolagers 2 schematisch dargestellt. Soweit es sinnvoll ist, wird auf die vorangegangenen Erläuterungen, insbesondere hinsichtlich Fig. 1, Bezug genommen. Die in Fig. 8 dargestellte Ausgestaltungsvariante unterscheidet sich zu der Ausgestaltung des Hydrolagers, wie es in Fig. 1 gezeigt ist, insbesondere durch die Anordnung und Ausgestaltung der Drosseleinheit 56.

Für das in Fig. 8 gezeigte Hydrolager 2 ist es bevorzugt vorgesehen, dass der Drosselkanal 16 zumindest teilweise von dem Flüssigkeitskanal 54 der Drosseleinheit 56 gebildet ist, wobei die Drosseleinheit 56 in dem Hauptgehäuse 4 unterhalb der Tragfeder 6 angeordnet ist. Somit grenzt die Drosseleinheit 56 zumindest teilweise mit einer zugehörigen Stirnseite an die Arbeitskammer 8 an. An der von der Arbeitskammer 8 abgewandten Stirnseite der Drosseleinheit 56 kann eine Trennwand 30 angrenzen, die sich in Radialrichtung zwischen der Mantelwandung des Hauptgehäuses 4 erstreckt. Die Trennwand 30 kann dabei zum stirnseitigen Abdecken oder Schließen des Flüssigkeitskanals 54 ausgebildet sein.

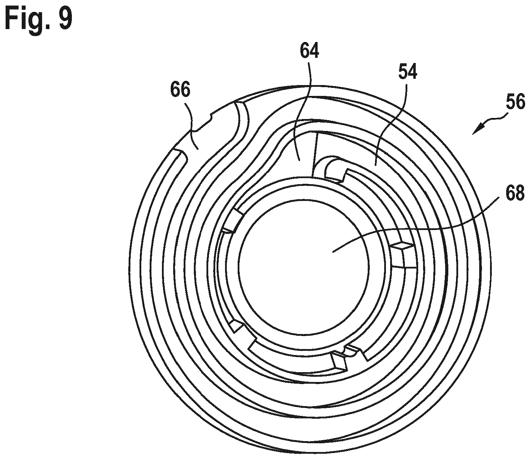

In der Fig. 9 ist die Drosseleinheit 56 schematisch in einer perspektivischen Ansicht gezeigt. Dabei ist ersichtlich, dass der Flüssigkeitskanal 54 bevorzugt schneckenförmig ausgestaltet ist. An einem ersten Ende 64 geht der Flüssigkeitskanal 54 in eine stirnseitige Öffnung der Drosseleinheit 56 über. Somit kann mittels der genannten Öffnung eine Fluidverbindung zwischen dem Flüssigkeitskanal 54 und der Arbeitskammer 8 gebildet werden. Ein zweites Ende 66 des Flüssigkeitskanals 54 endet in einer radialseitigen Öffnung der Drosseleinheit 56, wobei diese in den Verbindungskanal 62 übergeht, so dass, wie in Fig. 8 dargestellt, eine Fluidverbindung zwischen der Ausgleichskammer 14 und dem Flüssigkeitskanal 54 gebildet werden kann. Vorzugsweise ist die Drosseleinheit 56 als separates Element ausgebildet. Die Drosseleinheit 56 kann dazu bei der Montage in den Innenraum des Hauptgehäuses 4 eingeschoben werden. Dies erleichtert die Herstellung.

Außerdem hat es sich als vorteilhaft erwiesen, wenn die Drosseleinheit 56 ringförmig mit einem mittigen Aufnahmebereich 68 ausgebildet ist, wobei die Steuermembran 10 und/oder zumindest ein Teil des Aktors 12 in dem Aufnahmebereich 68 zumindest teilweise angeordnet ist bzw. sind. Dies erlaubt eine besonders kompakte Ausgestaltung des Hydrolagers 2 in Axialrichtung A.

### Bezugszeichenliste (Bestandteil der Beschreibung)

- A: Axilrichtung des Hauptgehäuses
- R: Radialrichtung des Hauptgehäuses
- K: Axilrichtung des Kammergehäuses
- 2: Hydrolager
- 4: Hauptgehäuse
- 6: Tragfeder
- 8: Arbeitskammer
- 10: Steuermembran
- 12: Aktor
- 14: Ausgleichskammer
- 16: Drosselkanal
- 18: Kammergehäuse
- 20: erste Stirnseite
- 22: Mantelseitenabschnitt
- 24: Innenraum des Kammergehäuses
- 26: Stirnseite des Hauptgehäuses
- 28: Befestigungselement
- 30: Trennwand
- 32: Stator
- 34: Anker
- 36: Ankerstößel
- 38: weiterer Mantelseitenabschnitt
- 40: Rollmembran
- 42: Mantelwandung des Kammergehäuses
- 44: Zusatzkammer
- 46: weitere Stirnseite des Kammergehäuses
- 48: Deckel
- 50: Bereich der Mantelwandung des Hauptgehäuses
- 52: Halterung
- 54: Flüssigkeitskanal
- 56: Drosseleinheit
- 58: Drosselscheibe
- 60: Durchgangsöffnung
- 62: Verbindungskanal
- 64: erstes Ende
- 66: zweites Ende
- 68: Aufnahmebereich

## Patentansprüche

1. Hydrolager (2) aufweisend:
- ein zylindrisches Hauptgehäuse (4),
- eine von dem Hauptgehäuse (4) eingefasste Tragfeder (6),
- eine von der Tragfeder (6) zumindest teilweise umschlossene Arbeitskammer (8) mit einem Arbeitskammervolumen, wobei die Arbeitskammer (8) mit Hydraulikflüssigkeit gefüllt ist,
- eine Steuermembran (10), die zur Veränderung des Arbeitskammervolumens ausgebildet ist,
- einen Aktor (12), der zum Auslenken der Steuermembran (10) an die Steuermembran (10) gekoppelt ist,
- eine Ausgleichskammer (14), und
- einen Drosselkanal (16), der sich von der Arbeitskammer (8) zu der Ausgleichskammer (14) erstreckt, so dass die Arbeitskammer (8) und die Ausgleichskammer (14) hydraulisch verbunden sind,
**gekennzeichnet durch**
- ein zylindrisches Kammergehäuse (18), das mit einer zugehörigen, ersten Stirnseite (20) an einem äußeren Mantelseitenabschnitt (22) des Hauptgehäuses (4) angeordnet ist,
wobei die Ausgleichskammer (14) von zumindest einem Teil eines Innenraums des Kammergehäuses (18) gebildet ist.

2. Hydrolager (2) nach dem vorhergehenden Anspruch, **gekennzeichnet durch** eine Rollmembran (40), die umlaufend an einer Mantelwandung des Kammergehäuses (18) befestigt ist, so dass die Rollmembran (40) den Innenraum des Kammergehäuses (18) in die Ausgleichskammer (14) und eine Zusatzkammer unterteilt.

3. Hydrolager (2) nach einem der vorhergehenden Ansprüche, **dadurch gekennzeichnet, dass** eine Axialrichtung A des zylindrischen Kammergehäuses (18) in einer Radialrichtung R des Hauptgehäuses (4) oder schräg zu der Radialrichtung R des Hauptgehäuses (4) ausgerichtet ist.

4. Hydrolager (2) nach einem der vorhergehenden Ansprüche, **dadurch gekennzeichnet, dass** das Hauptgehäuse (4) und das Kammergehäuse (18) zumindest teilweise integral ausgebildet sind.

5. Hydrolager (2) nach einem der vorhergehenden Ansprüche 1 bis 3, **dadurch gekennzeichnet, dass** das Hauptgehäuse (4) und das Kammergehäuse (18) getrennt ausgebildet sind, wobei das Kammergehäuse (18) an dem Hauptgehäuse (4) befestigt ist.

6. Hydrolager (2) nach einem der vorhergehenden Ansprüche, **dadurch gekennzeichnet, dass** der Drosselkanal (16) zumindest teilweise von einem Flüssigkeitskanal (54) einer Drosseleinheit (56) gebildet ist, wobei die Drosseleinheit (56) in dem Hauptgehäuse (4) unterhalb der Tragfeder (6) angeordnet ist.

7. Hydrolager (2) nach dem vorhergehenden Anspruch, **dadurch gekennzeichnet, dass** die Drosseleinheit (56) ringförmig mit einem mittigen Aufnahmebereich (68) ausgebildet ist, wobei die Steuermembran (10) und/oder der Aktor (12) in dem Aufnahmebereich (68) zumindest teilweise angeordnet ist bzw. sind.

8. Hydrolager (2) nach einem der vorhergehenden Ansprüche 1 bis 5, **dadurch gekennzeichnet, dass** der Drosselkanal (16) zumindest teilweise von einem Flüssigkeitskanal (54) einer Drosseleinheit (56) gebildet ist, wobei die Drosseleinheit (56) in dem Kammergehäuse (18) an der zugehörigen ersten Stirnseite (20) angeordnet ist.

9. Hydrolager (2) nach dem vorhergehenden Anspruch, **dadurch gekennzeichnet, dass** die Drosseleinheit (56) zumindest teilweise von einer ersten Stirnwand an der ersten Stirnseite (20) des Kammergehäuses (18) ausgebildet ist.

10. Hydrolager (2) nach einem der vorhergehenden Ansprüche 1 bis 5, **dadurch gekennzeichnet, dass** der Drosselkanal (16) zumindest teilweise von einem Flüssigkeitskanal (54) einer Drosseleinheit (56) gebildet ist, und dass die Drosseleinheit (56) zumindest teilweise von einer Mantelwandung im Bereich des Mantelseitenabschnitt (22) des Hauptgehäuses (4) ausgebildet ist.

11. Hydrolager (2) nach dem vorhergehenden Anspruch, **dadurch gekennzeichnet, dass** der Drosseleinheit (56) eine Drosselscheibe (58) mit einer Durchgangsöffnung (60) zugeordnet ist, die eine Öffnung des Drosselkanals (16) zu der Ausgleichskammer (14) bildet.

12. Hydrolager (2) nach einem der vorhergehenden Ansprüche, **gekennzeichnet durch** einen Verbindungskanal (62), der zumindest einen Teil des Drosselkanals (16) bildet und der sich durch die Tragfeder (6) und/oder das Hauptgehäuse (4) erstreckt.

13. Hydrolager (2) nach einem der vorhergehenden Ansprüche, **gekennzeichnet durch** einen Deckel, der an einer zweiten Stirnseite (46) des Kammergehäuses (18) angeordnet ist.

14. Kraftfahrzeug aufweisend:
- einen Fahrzeugrahmen,
- einen Motor und
- ein Motorlager, das ein lagernde Verbindung zwischen dem Motor und dem Fahrzeugrahmen bildet,
**dadurch gekennzeichnet, dass**
das Motorlager von einem Hydrolager (2) nach einem der vorhergehenden Ansprüche 1 bis 13 gebildet ist.

## Claims

1. Hydraulic bearing (2) having:
- a cylindrical main housing (4),
- a supporting spring (6) enclosed by the main housing (4),
- a working chamber (8) which is at least partially enclosed by the supporting spring (6) and which has a working chamber volume, wherein the working chamber (8) is filled with hydraulic liquid,
- a control diaphragm (10) which is designed for varying the working chamber volume,
- an actuator (12) which is coupled to the control diaphragm (10) for the purposes of deflecting the control diaphragm (10),
- a compensation chamber (14), and
- a throttle channel (16) which extends from the working chamber (8) to the compensation chamber (14) such that the working chamber (8) and the compensation chamber (14) are hydraulically connected,
**characterized by**
- a cylindrical chamber housing (18) which is arranged with an associated first face side (20) on an outer shell side section (22) of the main housing (4),
- wherein the compensation chamber (14) is formed by at least a part of an interior space of the chamber housing (18).

2. Hydraulic bearing (2) according to the preceding claim, **characterized by** a rolling diaphragm (40) which is fastened in an encircling manner to a shell wall of the chamber housing (18), such that the rolling diaphragm (40) divides the interior space of the chamber housing (18) into the compensation chamber (14) and an auxiliary chamber.

3. Hydraulic bearing (2) according to either of the preceding claims, **characterized in that** an axial direction A of the cylindrical chamber housing (18) is oriented in a radial direction R of the main housing (4) or obliquely with respect to the radial direction R of the main housing (4).

4. Hydraulic bearing (2) according to any of the preceding claims, **characterized in that** the main housing (4) and the chamber housing (18) are formed at least partially integrally.

5. Hydraulic bearing (2) according to any of the preceding Claims 1 to 3, **characterized in that** the main housing (4) and the chamber housing (18) are formed separately, wherein the chamber housing (18) is fastened to the main housing (4).

6. Hydraulic bearing (2) according to any of the preceding claims, **characterized in that** the throttle channel (16) is formed at least partially by a liquid channel (54) of a throttle unit (56), wherein the throttle unit (56) is arranged in the main housing (4) below the supporting spring (6).

7. Hydraulic bearing (2) according to the preceding claim, **characterized in that** the throttle unit (56) is of ring-shaped form with a central receiving region (68), wherein the control diaphragm (10) and/or the actuator (12) are/is arranged at least partially in the receiving region (68).

8. Hydraulic bearing (2) according to any of the preceding Claims 1 to 5, **characterized in that** the throttle channel (16) is formed at least partially by a liquid channel (54) of a throttle unit (56), wherein the throttle unit (56) is arranged in the chamber housing (18) at the associated first face side (20).

9. Hydraulic bearing (2) according to the preceding claim, **characterized in that** the throttle unit (56) is formed at least partially by a first face wall at the first face side (20) of the chamber housing (18) .

10. Hydraulic bearing (2) according to any of the preceding Claims 1 to 5, **characterized in that** the throttle channel (16) is formed at least partially by a liquid channel (54) of a throttle unit (56), and **in that** the throttle unit (56) is formed at least partially by a shell wall in the region of the shell side section (22) of the main housing (4).

11. Hydraulic bearing (2) according to the preceding claim, **characterized in that** the throttle unit (56) is assigned a throttle disc (58) with a passage opening (60) which forms an opening of the throttle channel (16) to the compensation chamber (14).

12. Hydraulic bearing (2) according to any of the preceding claims, **characterized by** a connecting channel (62) which forms at least a part of the throttle channel (16) and which extends through the supporting spring (6) and/or the main housing (4).

13. Hydraulic bearing (2) according to any of the preceding claims, **characterized by** a cover which is arranged at a second face side (46) of the chamber housing (18).

14. Motor vehicle having:
- a vehicle frame,
- an engine and
- an engine bearing which forms a bearing connection between the engine and the vehicle frame,
**characterized in that**
the engine bearing is formed by a hydraulic bearing (2) according to any of the preceding Claims 1 to 13.

## Revendications

1. Palier hydraulique (2) comprenant :
- un logement principal cylindrique (4),
- un ressort de support (6) enserré par le logement principal (4),
- une chambre de travail (8) entourée au moins partiellement par le ressort de support (6) et dotée d'un volume de chambre de travail, dans lequel la chambre de travail (8) est remplie de liquide hydraulique,
- une membrane de commande (10) qui est réalisée pour la modification du volume de chambre de travail,
- un actionneur (12) qui est accouplé à la membrane de commande (10) pour la déviation de la membrane de commande (10),
- une chambre de compensation (14), et
- un canal d'étranglement (16) qui s'étend à partir de la chambre de travail (8) jusqu'à la chambre de compensation (14), de sorte que la chambre de travail (8) et la chambre de compensation (14) soit reliées hydrauliquement,
**caractérisé par**
- un logement de chambre cylindrique (18) qui est disposé, par un premier côté frontal associé (20), au niveau d'une partie latérale d'enveloppe extérieure (22) du logement principal (4),
la chambre de compensation (14) étant formée par au moins une partie d'un espace intérieur du logement de chambre (18) .

2. Palier hydraulique (2) selon la revendication précédente, **caractérisé par** une membrane déroulante (40) qui est fixée de manière périphérique à une paroi d'enveloppe du logement de chambre (18), de sorte que la membrane déroulante (40) divise l'espace intérieur du logement de chambre (18) en la chambre de compensation (14) et une chambre supplémentaire.

3. Palier hydraulique (2) selon l'une des revendications précédentes, **caractérisé en ce qu'**une direction axiale A du logement de chambre cylindrique (18) est orientée dans une direction radiale R du logement principal (4) ou de manière oblique par rapport à la direction radiale R du logement principal (4).

4. Palier hydraulique (2) selon l'une des revendications précédentes, **caractérisé en ce que** le logement principal (4) et le logement de chambre (18) sont réalisés au moins partiellement d'un seul tenant.

5. Palier hydraulique (2) selon l'une des revendications précédentes 1 à 3, **caractérisé en ce que** le logement principal (4) et le logement de chambre (18) sont réalisés de manière séparée, le logement de chambre (18) étant fixé au logement principal (4).

6. Palier hydraulique (2) selon l'une des revendications précédentes, **caractérisé en ce que** le canal d'étranglement (16) est formé au moins partiellement par un canal de liquide (54) d'une unité d'étranglement (56), l'unité d'étranglement (56) étant disposée dans le logement principal (4) en dessous du ressort de support (6).

7. Palier hydraulique (2) selon la revendication précédente, **caractérisé en ce que** l'unité d'étranglement (56) est réalisée de manière annulaire avec une région de réception centrale (68), la membrane de commande (10) et/ou l'actionneur (12) étant disposé(e) ou disposés au moins partiellement dans la région de réception (68).

8. Palier hydraulique (2) selon l'une des revendications précédentes 1 à 5, **caractérisé en ce que** le canal d'étranglement (16) est formé au moins partiellement par un canal de liquide (54) d'une unité d'étranglement (56), l'unité d'étranglement (56) étant disposée dans le logement de chambre (18) au niveau du premier côté frontal associé (20).

9. Palier hydraulique (2) selon l'une des revendications précédentes, **caractérisé en ce que** l'unité d'étranglement (56) est réalisée au moins partiellement par une première paroi frontale au niveau du premier côté frontal (20) du logement de chambre (18).

10. Palier hydraulique (2) selon l'une des revendications précédentes 1 à 5, **caractérisé en ce que** le canal d'étranglement (16) est formé au moins partiellement par un canal de liquide (54) d'une unité d'étranglement (56), et **en ce que** l'unité d'étranglement (56) est réalisée au moins partiellement par une paroi d'enveloppe dans la région de la partie latérale d'enveloppe (22) du logement principal (4).

11. Palier hydraulique (2) selon la revendication précédente, **caractérisé en ce qu'**une plaque d'étranglement (58) dotée d'une ouverture traversante (60) est associée à l'unité d'étranglement (56), laquelle ouverture traversante forme une ouverture du canal d'étranglement (16) jusqu'à la chambre de compensation (14) .

12. Palier hydraulique (2) selon l'une des revendications précédentes, **caractérisé par** un canal de liaison (62) qui forme au moins une partie du canal d'étranglement (16) et qui s'étend à travers le ressort de support (6) et/ou le logement principal (4).

13. Palier hydraulique (2) selon l'une des revendications précédentes, **caractérisé par** un couvercle qui est disposé au niveau d'un deuxième côté frontal (46) du logement de chambre (18).

14. Véhicule automobile comprenant :
- un cadre de véhicule,
- un moteur et
- un palier de moteur qui forme une liaison de support sur palier entre le moteur et le cadre de moteur,
**caractérisé en ce que**
le palier de moteur est formé par un palier hydraulique (2) selon l'une des revendications précédentes 1 à 13.
